# EUROPEAN PATENT SPECIFICATION

(11) **EP 4 236 243 B1**
(45) Date of publication and mention of the grant of the patent: **24.06.2026**
(21) Application number: 22175857.6
(22) Date of filing: 27.05.2022
(51) Int. Cl.: H04L 41/344, H04L 41/28

(54) **NETWORK CONNECTION METHOD BASED ON INTELLIGENT BASEBOARD MANAGEMENT CONTROLLER**
NETZWERKVERBINDUNGSVERFAHREN BASIEREND AUF EINER INTELLIGENTEN BASISPLATINENVERWALTUNGSSTEUERUNG
PROCÉDÉ DE CONNEXION RÉSEAU BASÉ SUR UN CONTRÔLEUR INTELLIGENT DE GESTION DE CARTE DE BASE

(30) Priority: 25.02.2022 TW 111107176
(43) Date of publication of application: 30.08.2023
(73) Proprietor: Advantech Co., Ltd., Taipei City 114 (TW)
(72) Inventor: CHANG, Shu-ming, 114 Taipei City (TW); LIN, Shang-Ju, 114 Taipei City (TW); LIU, Yi-Jung, 114 Taipei City (TW)
(74) Representative: Friese Goeden Patentanwälte PartGmbB

(56) References cited:
- EP-A1- 3 255 527
- US-A1- 2016 112 264
- US-B1- 7 626 944
- REVISION DOCUMENT ET AL: "-IPMI - Intelligent Platform Management Interface Specification Second Generation v2.0 Intel Hewlett-Packard NEC Dell Intelligent Platform Management Interface Specification 2 Revision History", 30 October 2013 (2013-10-30), pages 1 - 238, XP055979442, Retrieved from the Internet <URL:https://www.intel.com/content/dam/www/public/us/en/documents/product-briefs/ipmi-second-gen-interface-spec-v2-rev1-1.pdf> [retrieved on 20221109]
- REVISION DOCUMENT ET AL: "-IPMI - Intelligent Platform Management Interface Specification Second Generation v2.0 Intel Hewlett-Packard NEC Dell Intelligent Platform Management Interface Specification 2 Revision History", 1 October 2013 (2013-10-01), pages 207 - 418, XP055979768, Retrieved from the Internet <URL:https://www.intel.com/content/dam/www/public/us/en/documents/product-briefs/ipmi-second-gen-interface-spec-v2-rev1-1.pdf> [retrieved on 20221109]

## Description

### FIELD OF THE INVENTION

This disclosure relates to a network connection method, particularly to a method for establishing a network connection between an intelligent baseboard management controller (iBMC) and a management server.

### BACKGROUND

A baseboard management controller (BMC) is a special-purpose microcontroller, which is usually disposed on a motherboard of an electronic device (such as computer device, automatic device). By the use of BMC disposed on the motherboard of the electronic device, administrator can remotely monitor the values of each of sensors, or control the electronic device to execute a specific operation. For example, the administrator monitors the values of temperature, voltage, rotating speed of fan, and/or the operating status of operating system sensed by the sensors in the electronic device; or, when the operating system of the electronic device is crash, the administrator can remotely control a rebooting procedure for the electronic device via the BMC, so that the operating system may be rebooted, and therefore can continue to execute the operation.

In order to remotely obtain various sense values in each of the electronic devices or remotely manage each of the electronic devices, the administrator needs to configure a network environment of the BMC of each of the electronic devices to a management server in advance. For example, the connection information of IP address, Port, and login password of each BMC is configured to the management server. Afterwards, the administrator can manage the connection information of each BMC via a management tool, such that the management server can be automatically connected to each BMC, and therefore access the services provided by the BMC.

However, some problem is usually happened in process of configuring the network environment of the BMC of each of the electronic devices to the management server. For example, the management server and the electronic device are in different network segmentations, or the electronic device is located in the intranet, such that the management server in external network cannot directly establish a network connection with the BMC of the electronic device; otherwise, when the electronic device is connected with the network by a dynamic IP address, if the dynamic IP address is change, the management server cannot establish the network connection with the BMC of the electronic device via the originally configured connection information. In the past, if the management server wanted to establish the network connection with the BMC of the electronic device, it had to go through a complex hole punching or a complex configuration to VPN environment, this will bring troubles for the administrator in the configuration of the network connection.

Revision Document ET AL:"-IMPI - Intelligent Platform Management Interface Specification Second Generation v2.0 Intel Hewlett-Packard NEC Dell Intelligent Platfoirm Management Interface Specification 2 Revision History", 1 October 2013 (2013-10-01), page 1-238., XP055979442, Retrieved from the internet URL:https://www.intel.com/content/dam/www/public/us/en/documents/product-briefs/impi-s econd-gen-interface-spec-v2-rev1-1.pdf [retrived on 2022-11-09] & Revision Document ET AL: "- IMPI - Intelligent Platform Management Interface Specification Second Generation V2.0 Intel Hewllet-Packard NEC Dell Intelligent Platform Management Interface Specification 2 Revision History", 1 October 2013 (2013-10-01), pages 207-418, XP055979768, Retrieved from the internet URL: URL:https://www.intel.com/content/dam/www/public/us/en/documents/product-briefs/impi-s econd-gen-interface-spec-v2-rev1-1.pdf [retrived on 2022-11-09] disclose Intelligent Platform Management Interface Specification. Chapter 14.1discloses PPP UDP proxy Option. This option allows the BMC to function as a low-performance communication bridge to allow software to sending and receiving UDP data via a pre-established BMC PPP connection. If the call-back option is supported, local management software or BIOS can trigger the BMC to dial up the remote console. Chapter 14.5.15 further discloses that the BMC shall request the remote IP Address by issuing a configure-request for Option 3 with a IP Address value 00.00.00.00 [This provides a mechanism for the BMC to obtain the remote console connection's IP Address in order to enable the BMC to asynchronously send UDP datagrams to the remote console]. However, The Intelligent Platform Management Interface Specification does not clearly discloses how the pre-established BMC PPP connection is established.

EP3255527A1 discloses technologies for remote keyboard-video-mouse sessions can include failover mechanisms. In EP3255527A1, a system can establish a first remote keyboard-video-mouse session between a console application on the system and a first server application executed by a controller on a server. The first remote key-board-video-mouse session can be established via a first network connection between the system and the controller. Next, the system can detect an error associated with the first remote keyboard-video-mouse session. In response to the error, the system can establish a second remote keyboard-video-mouse session between the console application and a second server application executed by an operating or a basic input/output program on the server. The second remote keyboard-video-mouse session can be established via a second net-work connection between the system and the second server application. EP3255527A1 further discloses that the first network connection is established based on a first network address assigned to the controller, and wherein the second network connection is based on a second network address assigned to at least one of the operating system (208) or the basic input/output system program (162).

### SUMMARY

According to the present invention, a network connection method according to claim 1 is provided. Preferred embodiemnts are further defined in the dependent claims.

It is one objective of this disclosure to provide a network connection method based on an intelligent baseboard management controller, which is applied to establish a network connection between the intelligent baseboard management controller of an electronic device and a management server. The electronic device is installed with a connection configuration program. The electronic device executes the connection configuration program to provide a connection information of the management server to the intelligent baseboard management controller. The intelligent baseboard management controller executes a network connection procedure according to the connection information of the management server so as to establish the network connection between the intelligent baseboard management controller and the management server.

It is other objective of this disclosure to provide the network connection method based on intelligent baseboard management controller, after the network connection has established between the intelligent baseboard management controller and the management server, the system administrator can monitor the sense values in the electronic device via the intelligent baseboard management controller, and determine whether the operation of the electronic device is normal according to the monitored sense values.

It is another objective of this disclosure to provide the network connection method based on intelligent baseboard management controller, after the network connection has established between the intelligent baseboard management controller and the management server, the system administrator can remotely control the operation of the electronic device so that the electronic device can execute the specific operation according to the requirement of the system administrator.

This disclosure further provides a network connection method based on an intelligent baseboard management controller, the network connection method comprising: disposing the intelligent baseboard management controller on a motherboard of an electronic device; installing a connection configuration program to the electronic device; transmitting a connection information packet by the electronic device executing the connection configuration program to the intelligent baseboard management controller; parsing a connection information of a management server from the connection information packet by the intelligent baseboard management controller after the intelligent baseboard management controller receiving the connection information packet; and executing a network connection procedure by the intelligent baseboard management controller according to the connection information of the management server to establish a network connection between the intelligent baseboard management controller and the management server.

The connection configuration program is installed in a basic input and output system of the electronic device, or an operating system of the electronic device.

The electronic device is connected to a connection information provider via a serial port, the connection information provider transmits the connection information of the management server to the connection configuration program of the electronic device via the serial port.

In one embodiment of this disclosure, after receiving the connection information packet, the intelligent baseboard management controller further executing the following steps: parsing an identification information from the connection information packet; executing an authentication procedure to the identification information; and continuing to execute the network connection procedure after the identification information has passed an authentication in the authentication procedure; or prohibiting to execute the network connection procedure when the identification information does not pass the authentication in the authentication procedure.

In one embodiment of this disclosure, wherein the identification information is an identification code, the authentication procedure is a procedure for authenticating whether the identification information is matched to a MAC address of the electronic device, a product serial number of the electronic device or a chip serial number of the intelligent baseboard management controller.

In one embodiment of this disclosure, wherein after the network connection between the intelligent baseboard management controller and the management server has established, the network connection method further comprising: transmitting a packet including sensor options by the intelligent baseboard management controller to the management server; transmitting a command for collecting sense values based on the packet including sensor options by the management server to the intelligent baseboard management controller; and reporting a response packet including sense values based on the command for collecting sense values by the intelligent baseboard management controller to the management server.

In one embodiment of this disclosure, before the intelligent baseboard management controller transmits the packet including sensor options to the management server, the network connection method further comprising: transmitting a command for requesting sensor options by the management server to the intelligent baseboard management controller; and transmitting the packet including sensor options based on the command for requesting sensor options by the intelligent baseboard management controller to the management server.

In one embodiment of this disclosure, wherein after the network connection between the intelligent baseboard management controller and the management server has established, the network connection method further comprising: transmitting a packet including control options by the intelligent baseboard management controller to the management server; transmitting a specific control command based on the packet including control options by the management server to the intelligent baseboard management controller; executing a specific operation based the specific control command by the intelligent baseboard management controller; and reporting an operation result to the management server by the intelligent baseboard management controller after the specific operation has finished.

In one embodiment of this disclosure, before the intelligent baseboard management controller sends the packet including control options to the management server, the network connection method further comprising: transmitting a command for requesting control options by the management server to the intelligent baseboard management controller; and transmitting the packet including control options based on the command for requesting control options by the intelligent baseboard management controller to the management server.

### BRIEF DESCRIPTION OF THE DRAWINGS

Fig. 1 is a schematic view of a remote monitoring system of this disclosure.
Fig. 2 is a structural view of an electronic device of this disclosure.
Fig. 3 is a flow chart of establishing a network connection between the intelligent baseboard management controller of the electronic device and the management server according to one embodiment of this disclosure.
Fig. 4 is an operation timing diagram of remotely monitoring sense values of the electronic device according to one embodiment of this disclosure.
Fig. 5 is an operation timing diagram of remotely controlling the electronic device to execute a specific operation according to one embodiment of this disclosure.

### DETAILED DESCRIPTION OF THE PREFERRED EMBODIMENTS

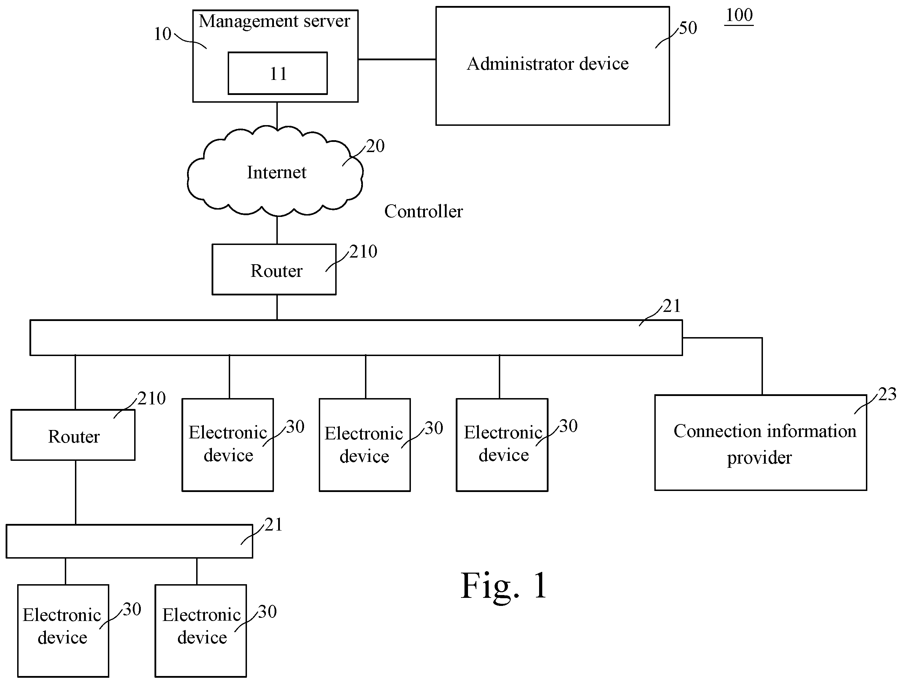

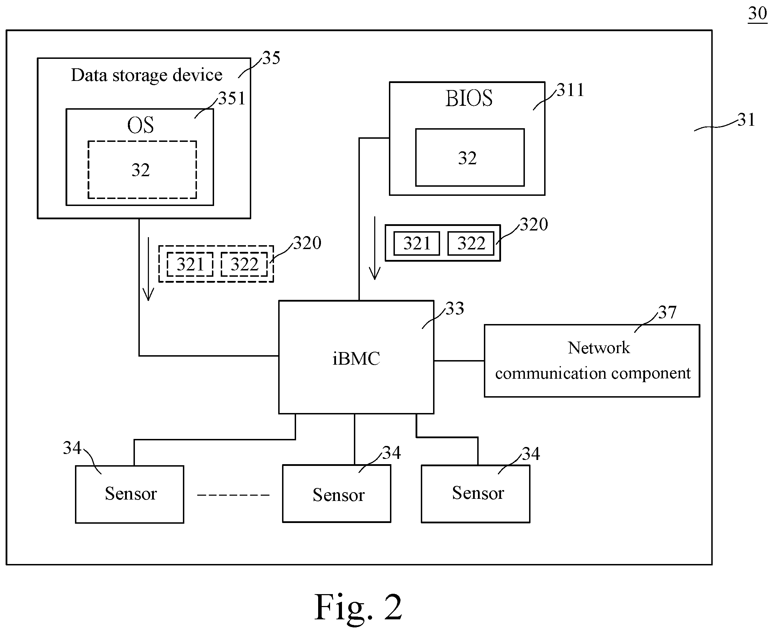

Referring to Fig. 1 and Fig. 2, there are shown a schematic view of a remote monitoring system of this disclosure, and a structural view of an electronic device of this disclosure. As shown in Fig. 1, the remote monitoring system 100 comprises a management server 10, at least one electronic device 30, and an administrator device 50. The electronic device 30 may be an intelligent device, a workstation, or a computer device with special computing functions. A system administrator of the management server 10 can remotely monitor, control, or manage the electronic device 30 by Internet 20.

As shown in Fig. 1, the electronic device 30 is located in a network environment of Intranet 21, and connected to the Internet 20 via a router 210 with a firewall. As shown in Fig. 2, the electronic device 30 comprises a motherboard 31, an intelligent baseboard management controller (iBMC) 33, a data storage device 35, and a network communication component 37. The iBMC 33 is electrically connected to the motherboard 31, the data storage device 35, and the network communication component 37. The network communication component 37 may be a network card or a chip capable connecting the Internet 20. The electronic device 30 is connected to the router 210 and/or the Internet 20 by the network communication component 37.

As shown in Fig. 2, further, the electronic device 30 is installed with a connection configuration program 32. In one embodiment of this disclosure, the motherboard 31 comprises a basic input and output system (BIOS) 311, and the connection configuration program 32 is installed in the BIOS 311 in a form of firmware. In another embodiment of this disclosure, the data storage device 35 comprises an operating system 35, and the connection configuration program 32 is installed in the operating system 351 in a form of software.

As shown in Fig. 1 and Fig. 2, the connection configuration program 32 is configured with a connection information 321 of the management server 10, for example, IP address, Port, SSL certificates of the management server 10, or other information used for establishing a connection with the management server 10. In one embodiment of this disclosure, a connection information provider 23 is disposed near the electronic devices 30. Each of the electronic devices 30 is connected to the connection information provider 23 via a serial port or the Intranet 21. The connection information provider 23 may be a networkable communication device, which can obtain the connection information 321 of the management server 10 from a background of the management server 10 or a specific web page. The connection information provider 23 transmits the connection information 321 of the management server 10 to the connection configuration program 32 of each of the electronic devices 30 via the serial port or the Intranet 21. The connection configuration program 32 could also be, for example, an APP program that can be configured to network connect to the background of the management server 10 to obtain the connection information 321 of the management server 10, automatically.

After obtaining the connection information 321 of the management server 10, the electronic device 30 executes the connection configuration program 32 to package the connection information 321 of the management server 10 into a connection information packet 320, and transmit the connection information packet 320 to the iBMC 33. After the iBMC 33 receives the connection information packet 320, the iBMC 33 can parse the connection information 321 of the management server 10 from the connection information packet 320, and execute a network connection procedure according to the connection information 321 of the management server 10 so as to establish a network connection between the iBMC 33 and the management server 10.

In one embodiment of this disclosure, the administrator device 50 is a personal computer, which is an independent device from the management server 10. The system administrator can login the management server 10 by the use of the administrator device 50, remotely. When the administrator device 50 logins the management server 10, a human machine interface 11 of the management server 10 will be displayed on a screen of the administrator device 50, the system administrator operates the management server 10 by the human machine interface 11. The human machine interface 11 may be a Web portal interface. In another embodiment of this disclosure, the management server 10 and the management device 50 are the same device, the system administrator can directly operate the management server 10 by the human machine interface 11 displayed on the screen of the management server 10. After the network connection has established between the iBMC 33 and the management server 10, the system administrator can use the human machine interface 11 to monitor, control, or manage the electronic device 30, remotely.

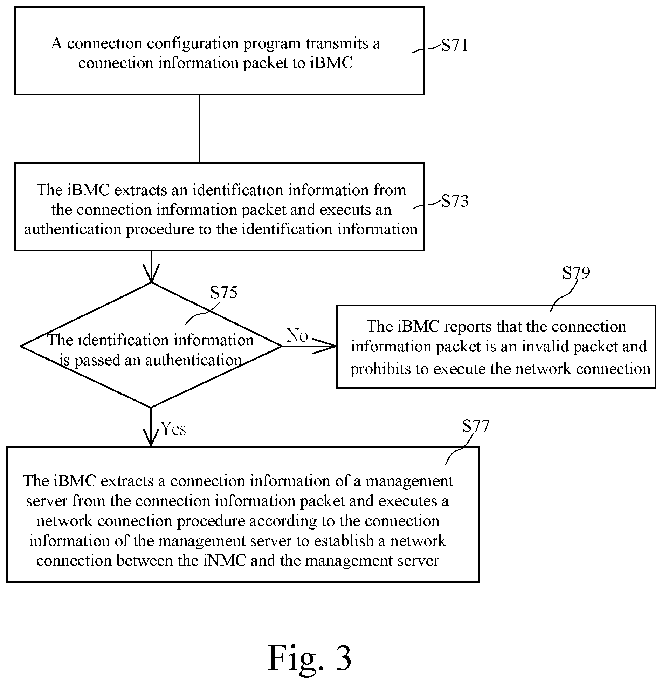

Referring to Fig. 3, there is a flow chart of establishing a network connection between the intelligent baseboard management controller of the electronic device and the management server according to one embodiment of this disclosure, with simultaneously reference to Fig. 1 and Fig. 2. As shown in Fig. 1, Fig. 2, and Fig. 3, firstly, in step S71, the electronic device 30 executes the connection configuration program 32 to transmit the connection information packet 320 to the iBMC 33. In step S73, after receiving the connection information packet 320, the iBMC 33 parses an identification information 322 from the connection information packet 320, and executes an authentication procedure to the identification information 322. In this disclosure, the identification information 322 is an identification code, and the authentication procedure is a procedure for authenticating whether the identification information 322 is matched to a MAC (Media Access Control) address of the network communication component 37, a product serial number of the electronic device 30, or a chip serial number of the iBMC 33.

In step S75, the iBMC 33 determines whether the identification information 322 is passed the authentication in the authentication procedure. In step S77, if the identification information 322 has passed the authentication in the authentication procedure, the connection information packet 320 transmitted from the connection configuration program 32 will be regarded as a valid packet; then, the iBMC 33 can parse the connection information 321 of the management server 10 from the valid connection information packet 320, and execute a network connection procedure so as to establish the network connection between the iBMC 33 and the management server 10. In step S79, otherwise, if the identification information 322 does not pass the authentication in the authentication procedure, the connection information packet 320 transmitted from the connection configuration program 32 will be regarded as an invalid packet, and then the iBMC 33 reports that the connection information packet 320 is the invalid packet to the connection configuration program 32, and prohibits to execute the network connection between the iBMC 33 and the management server 10.

Thus, by the use of the connection information 321 of the management server 10 provided by the connection configuration program 32, the iBMC 33 of this disclosure can not only quickly search the remote management server 10, but also can actively establish the network connection with the management server 10. Besides, in the process of establishing the network connection between the iBMC 33 and the management server 10, there is no need to go through the complex hole punching or the complex configuration of VPN, so as to simplify the flow of the network connection.

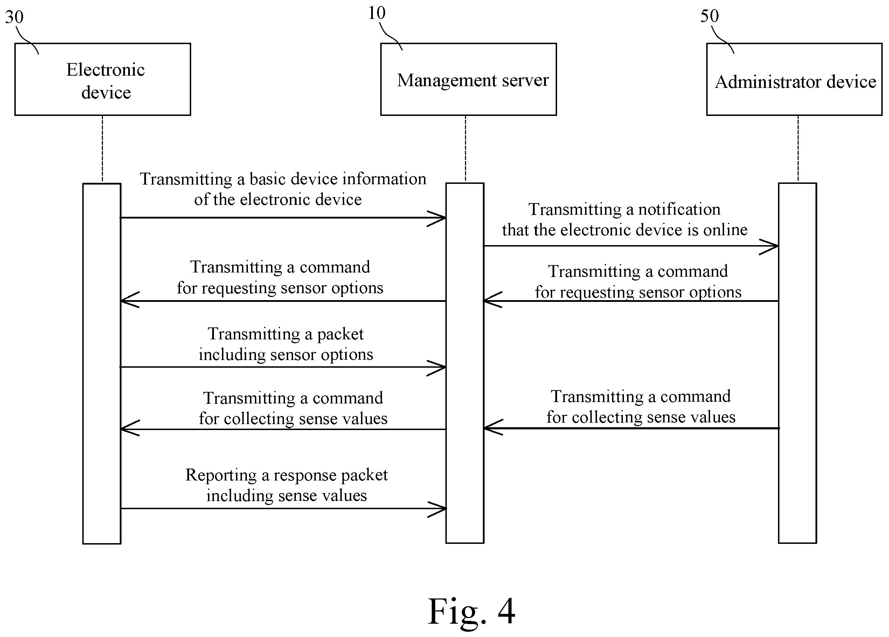

Referring to FIG. 4, there is an operation timing diagram of remotely monitoring sense values of the electronic device according to one embodiment of this disclosure, with simultaneously reference to Fig. 1 and Fig. 2. As shown in Fig. 1, Fig. 2, and Fig. 4, after the iBMC 33 has network connected to the management server 10, the iBMC 33 transmits a basic device information of the electronic device 30, for example, a product ID of the electronic device 30, to the management server 10. Then, the management server 10 transmits a notification that the electronic device 30 is online to the administrator device 50, such that the system administrator of the administrator device 50 can know that the electronic device 30 has been online.

Sequentially, the iBMC 33 transmits a packet including sensor options to the management server 10. In this disclosure, the electronic device 30 is provided with a plurality of sensors 34 therein. The iBMC 33 parses various sense values in the electronic device 30 via the sensors 34. For example, the sense value may be temperature, voltage, fan speed, or the operation status of operating system. After the management server 10 receives the packet including the sensor options, the sensor options supported by the electronic device 30 will be listed on the human machine interface 11. The system administrator selects one or more sensor options via the human machine interface 11 to generate a command for collecting sense values based on the selected sensor options. The management server 10 transmits the command for collecting sense values to the electronic device 30. After receiving the command for collecting sense values, the iBMC 33 of the electronic device 30 collects the sense values via the sensors 34, packages the sense values collected to generate a response packet including the sense values, and transmit the response packet including the collected sense values to the management server 10. Then, after receiving the response packet including the sense values, the management server 10 will present the sense values collected from the electronic device 30 on the human machine interface 11, so that the system administer can know the current sense values of the electronic device 30.

In one embodiment of this disclosure, the iBMC 33 of the electronic device 30 can actively transmits the packet including the sensor options to the management server 10. In another embodiment of this disclosure, alternatively, the management server 10 transmits a command for requesting sensor options to the electronic device 30, and then the iBMC 33 of the electronic device 30 transmits the packet including the sensor options to the management server 10 according to the command for requesting sensor options.

Accordingly, after the network connection is established between the iBMC 33 and the management server 10, the system administrator can remotely monitor the sense values in the electronic device 30 via the iBMC 33, and determine whether the operation of the electronic device 30 is normal via the monitored sense values.

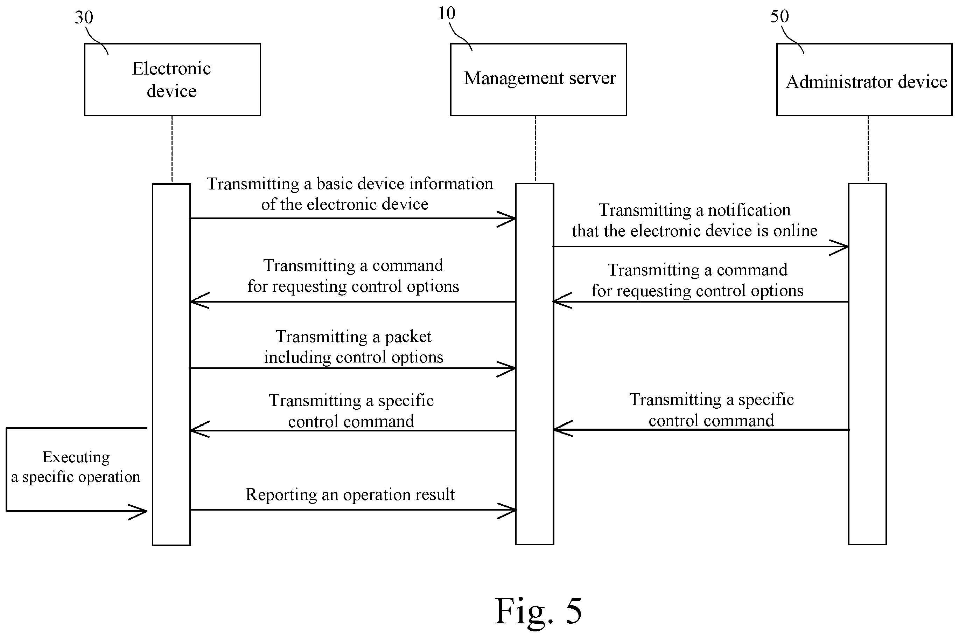

Referring to FIG. 5, there is an operation timing diagram of remotely controlling the electronic device to execute a specific operation according to one embodiment of this disclosure, with simultaneously reference to Fig. 1 and Fig. 2. As shown in Fig. 1, Fig. 2, and Fig. 5, after the iBMC 33 has network connected to the management server 10, the iBMC 33 transmits a basic device information of the electronic device 30, for example, a product ID of the electronic device 30, to the management server 10. Then, the management server 10 transmits a notification that the electronic device 30 is online to the administrator device 50, such that the system administrator of the administrator device 50 can know that the electronic device 30 has been online.

Sequentially, the iBMC 33 transmits a packet including control options to the management server 10. For example, the control options supported by the electronic device 30 may be control procedures of restarting operating system, updating firmware, erasing data, or/and encrypting data. After the management server 10 receives the packet including the control options, the control options supported by the electronic device 30 will be listed on the human machine interface 11. The system administrator selects one of the control options via the human machine interface 11 to generate a specific control command, and the management server 10 transmits the specific control command to the electronic device 30. After receiving the specific control command, the iBMC 33 of the electronic device 30 executes a specific operation according to the specific control command, and transmits an operation result to the management server 10 after the specific operation has finished. Then, after receiving the operation result, the management server 10 will present the operation result on the human machine interface 11, so that the system administrator can know that the electronic device 30 has finished the execution of the specific operation.

In one embodiment of this disclosure, the iBMC 33 of the electronic device 30 can actively transmits the packet including the control options to the management server 10. In another embodiment of this disclosure, alternatively, the management server 10 transmits a command for requesting control options to the electronic device 30, and then the iBMC 33 of the electronic device 30 transmits the packet including the control options to the management server 10 according to the command for requesting control options.

Accordingly, after the network connection is established between the iBMC 33 and the management server 10, the system administrator can remotely control the operation of the electronic device 30, or remotely set the operating parameters of the electronic device 30, so that the electronic device 30 can execute the specific operation according to the requirement of the system administrator.

In this disclosure, the packets/commands transmitted between the management server 10 and the iBMC 33 are standardized in a packet/command format that can be parsed by the human machine interface 11. Thus, the human machine interface 11 can access the control options or the control options in a unified packet/command format, and thereby correctly obtaion the sense values of the electronic device 30, or accurately control the electronic device 30 to execute the specific operation so as to effectively manage each of the electronic devices 30.

## Claims

1. A network connection method based on an intelligent baseboard management controller (33), comprising:
disposing the intelligent baseboard management controller (33) on a motherboard (31) of an electronic device (30);
installing a connection configuration program (32) to a basic input and output system (311) of the electronic device (30), or an operating system (351) of the electronic device (30);
transmitting a connection information packet (320) by the basic input and output system (311) or the operating system (351) of the electronic device (30) executing the connection configuration program (32) to the intelligent baseboard management controller (33);
parsing a connection information (321) of a management server (10) from the connection information packet (320) by the intelligent baseboard management controller (33) after the intelligent baseboard management controller (33) receiving the connection information packet (320); and
executing a network connection procedure by the intelligent baseboard management controller (33) according to the connection information (321) of the management server (10) to establish a network connection between the intelligent baseboard management controller (33) and the management server (10);
wherein the electronic device (30) is connected to a connection information provider (23) via a serial port, the connection information provider (23) transmits the connection information (321) of the management server (10) to the connection configuration program of the electronic device (30) via the serial port.

2. The network connection method according to Claim 1, **characterized in that**, after receiving the connection information packet (320), the intelligent baseboard management controller (33) further executing the following steps:
parsing an identification information (322) from the connection information packet (320);
executing an authentication procedure to the identification information (322); and
continuing to execute the network connection procedure after the identification information (322) has passed an authentication in the authentication procedure; or prohibiting to execute the network connection procedure when the identification information (322) does not pass the authentication in the authentication procedure.

3. The network connection method according to Claim 2, **characterized in that**, wherein the identification information (322) is an identification code, the authentication procedure is a procedure for authenticating whether the identification information (322) is matched to a MAC address of the electronic device (30), a product serial number of the electronic device (30) or a chip serial number of the intelligent baseboard management controller (33).

4. The network connection method according to Claim 1, **characterized in that**, wherein after the network connection between the intelligent baseboard management controller (33) and the management server (10) has established, the network connection method further comprising:
transmitting a packet including sensor options by the intelligent baseboard management controller (33) to the management server (10);
transmitting a command for collecting sense values based on the packet including sensor options by the management server (10) to the intelligent baseboard management controller (33); and
reporting a response packet including sense values based on the command for collecting sense values by the intelligent baseboard management controller (33) to the management server (10).

5. The network connection method according to Claim 4, **characterized in that**, before the intelligent baseboard management controller (33) transmits the packet including sensor options to the management server (10), the network connection method further comprising:
transmitting a command for requesting sensor options by the management server (10) to the intelligent baseboard management controller (33); and
transmitting the packet including sensor options based on the command for requesting sensor options by the intelligent baseboard management controller (33) to the management server (10).

6. The network connection method according to Claim 1, **characterized in that**, wherein after the network connection between the intelligent baseboard management controller (33) and the management server (10) has established, the network connection method further comprising:
transmitting a packet including control options by the intelligent baseboard management controller (33) to the management server (10);
transmitting a specific control command based on the packet including control options by the management server (10) to the intelligent baseboard management controller (33);
executing a specific operation based the specific control command by the intelligent baseboard management controller (33); and
reporting an operation result to the management server (10) by the intelligent baseboard management controller (33) after the specific operation has finished.

7. The network connection method according to Claim 6, **characterized in that**, before the intelligent baseboard management controller (33) sends the packet including control options to the management server (10), the network connection method further comprising:
transmitting a command for requesting control options by the management server (10) to the intelligent baseboard management controller (33); and
transmitting the packet including control options based on the command for requesting control options by the intelligent baseboard management controller (33) to the management server (10).

## Patentansprüche

1. Verfahren zur Netzwerkverbindung auf der Grundlage einer intelligenten Basisplatinen-Verwaltungssteuerung (33), umfassend:
Anordnen der intelligenten Basisplatinen-Verwaltungssteuerung (33) auf einer Hauptplatine (31) einer elektronischen Einrichtung (30);
Installieren eines Verbindungskonfigurationsprogramms (32) auf einem Basis-Eingabe- und -Ausgabesystem (311) der elektronischen Einrichtung (30) oder einem Betriebssystem (351) der elektronischen Einrichtung (30);
Übertragen eines Verbindungsinformationspakets (320) durch das Basis-Eingabe- und -Ausgabesystem (311) oder das Betriebssystem (351) der elektronischen Einrichtung (30), die das Verbindungskonfigurationsprogramm (32) ausführt, an die intelligente Basisplatinen-Verwaltungssteuerung (33);
Analysieren von Verbindungsinformationen (321) eines Verwaltungsservers (10) aus dem Verbindungsinformationspaket (320) durch die intelligente Basisplatinen-Verwaltungssteuerung (33), nachdem die intelligente Basisplatinen-Verwaltungssteuerung (33) das Verbindungsinformationspaket (320) empfangen hat; und
Ausführen eines Netzwerkverbindungsvorgangs durch die intelligente Basisplatinen-Verwaltungssteuerung (33) gemäß den Verbindungsinformationen (321) des Verwaltungsservers (10), um eine Netzwerkverbindung zwischen der intelligenten Basisplatinen-Verwaltungssteuerung (33) und dem Verwaltungsserver (10) herzustellen;
wobei die elektronische Einrichtung (30) über eine serielle Schnittstelle mit einem Verbindungsinformationsanbieter (23) verbunden ist, wobei der Verbindungsinformationsanbieter (23) die Verbindungsinformationen (321) des Verwaltungsservers (10) über die serielle Schnittstelle an das Verbindungskonfigurationsprogramm der elektronischen Einrichtung (30) überträgt.

2. Verfahren zur Netzwerkverbindung nach Anspruch 1, **dadurch gekennzeichnet, dass** nach dem Empfang des Verbindungsinformationspakets (320) die intelligente Basisplatinen-Verwaltungssteuerung (33) weiter die folgenden Schritte ausführt:
Analysieren von Identifikationsinformationen (322) aus dem Verbindungsinformationspaket (320);
Ausführen eines Authentifizierungsvorgangs in Bezug auf die Identifikationsinformationen (322); und
Fortsetzen des Ausführens des Netzwerkverbindungsvorgangs, nachdem die Identifikationsinformationen (322) die Authentifizierung im Authentifizierungsvorgang absolviert haben; oder Unterbinden des Ausführens des Netzwerkverbindungsvorgangs, wenn die Identifikationsinformationen (322) die Authentifizierung im Authentifizierungsvorgang nicht absolvieren.

3. Verfahren zur Netzwerkverbindung nach Anspruch 2, **dadurch gekennzeichnet, dass**, wenn es sich bei den Identifikationsinformationen (322) um einen Identifikationscode handelt, der Authentifizierungsvorgang ein Vorgang ist, um zu authentifizieren, ob die Identifikationsinformationen (322) mit einer MAC-Adresse der elektronischen Einrichtung (30), einer Produkt-Seriennummer der elektronischen Einrichtung (30) oder einer Chip-Seriennummer der intelligenten Basisplatinen-Verwaltungssteuerung (33) zusammenpassen.

4. Verfahren zur Netzwerkverbindung nach Anspruch 1, **dadurch gekennzeichnet, dass**, nachdem die Netzwerkverbindung zwischen der intelligenten Basisplatinen-Verwaltungssteuerung (33) und dem Verwaltungsserver (10) hergestellt wurde, das Verfahren zur Netzwerkverbindung weiter umfasst:
Übertragen eines Pakets, das Sensoroptionen enthält, durch die intelligente Basisplatinen-Verwaltungssteuerung (33) an den Verwaltungsserver (10);
Übertragen eines Befehls zum Sammeln von Erfassungswerten auf der Grundlage des Pakets, das Sensoroptionen enthält, durch den Verwaltungsserver (10) an die intelligente Basisplatinen-Verwaltungssteuerung (33); und
Berichten eines Antwortpakets, das Erfassungswerte enthält, auf der Grundlage des Befehls zum Sammeln von Erfassungswerten durch die intelligente Basisplatinen-Verwaltungssteuerung (33) an den Verwaltungsserver (10).

5. Verfahren zur Netzwerkverbindung nach Anspruch 4, **dadurch gekennzeichnet, dass**, bevor die intelligente Basisplatinen-Verwaltungssteuerung (33) das Paket, das Sensoroptionen enthält, an den Verwaltungsserver (10) überträgt, das Verfahren zur Netzwerkverbindung weiter umfasst:
Übertragen eines Befehls zum Anfordern von Sensoroptionen durch den Verwaltungsserver (10) an die intelligente Basisplatinen-Verwaltungssteuerung (33); und
Übertragen des Pakets, das Sensoroptionen enthält, auf der Grundlage des Befehls zum Anfordern von Sensoroptionen durch die intelligente Basisplatinen-Verwaltungssteuerung (33) an den Verwaltungsserver (10).

6. Netzwerkverbindungsverfahren nach Anspruch 1, **dadurch gekennzeichnet, dass**, nachdem die Netzwerkverbindung zwischen der intelligenten Basisplatinen-Verwaltungssteuerung (33) und dem Verwaltungsserver (10) hergestellt wurde, das Verfahren zur Netzwerkverbindung weiter umfasst:
Übertragen eines Pakets, das Steuerungsoptionen enthält, durch die intelligente Basisplatinen-Verwaltungssteuerung (33) an den Verwaltungsserver (10);
Übertragen eines spezifischen Steuerungsbefehls auf der Grundlage des Pakets, das Steuerungsoptionen enthält, durch den Verwaltungsserver (10) an die intelligente Basisplatinen-Verwaltungssteuerung (33);
Ausführen eines spezifischen Arbeitsvorgangs auf der Grundlage des spezifischen Steuerungsbefehls durch die intelligente Basisplatinen-Verwaltungssteuerung (33); und
Berichten eines Betriebsergebnisses an den Verwaltungsserver (10) durch die intelligente Basisplatinen-Verwaltungssteuerung (33), nachdem der spezifische Arbeitsvorgang abgeschlossen ist.

7. Verfahren zur Netzwerkverbindung nach Anspruch 6, **dadurch gekennzeichnet, dass**, bevor die intelligente Basisplatinen-Verwaltungssteuerung (33) das Paket, das Steuerungsoptionen enthält, an den Verwaltungsserver (10) überträgt, das Verfahren zur Netzwerkverbindung weiter umfasst:
Übertragen eines Befehls zum Anfordern von Steuerungsoptionen durch den Verwaltungsserver (10) an die intelligente Basisplatinen-Verwaltungssteuerung (33); und
Übertragen des Pakets, das Steuerungsoptionen enthält, auf der Grundlage des Befehls zum Anfordern von Steuerungsoptionen durch die intelligente Basisplatinen-Verwaltungssteuerung (33) an den Verwaltungsserver (10).

## Revendications

1. Procédé de connexion de réseau sur la base d'un contrôleur intelligent de gestion de carte de base (33), comprenant les étapes consistant à :
disposer le contrôleur intelligent de gestion de carte de base (33) sur une carte mère (31) d'un dispositif électronique (30) ;
installer un programme de configuration de connexion (32) sur un système d'entrée et de sortie de base (311) du dispositif électronique (30), ou un système d'exploitation (351) du dispositif électronique (30) ;
transmettre un paquet d'informations de connexion (320) via le système d'entrée et de sortie de base (311) ou le système d'exploitation (351) du dispositif électronique (30) exécutant le programme de configuration de connexion (32) au contrôleur intelligent de gestion de carte de base (33) ;
effectuer une analyse syntaxique, dite parsing, d'informations de connexion (321) d'un serveur de gestion (10) à partir du paquet d'informations de connexion (320) via le contrôleur intelligent de gestion de carte de base (33) après réception du paquet d'informations de connexion (320) par le contrôleur intelligent de gestion de carte de base (33) ; et
exécuter une procédure de connexion de réseau via le contrôleur intelligent de gestion de carte de base (33) en accord avec les informations de connexion (321) du serveur de gestion (10) pour établir une connexion de réseau entre le contrôleur intelligent de gestion de carte de base (33) et le serveur de gestion (10) ;
dans lequel le dispositif électronique (30) est connecté à un fournisseur d'informations de connexion (23) via un port sériel, le fournisseur d'informations de connexion (23) transmettant les informations de connexion (321) du serveur de gestion (10) au programme de configuration de connexion du dispositif électronique (30) via le port sériel.

2. Procédé de connexion de réseau selon la revendication 1, **caractérisé en ce que**, après réception du paquet d'informations de connexion (320), le contrôleur intelligent de gestion de carte de base (33) exécute en outre les étapes suivantes consistant à :
effectuer une analyse syntaxique d'informations d'identification (322) à partir du paquet d'informations de connexion (320) ;
exécuter une procédure d'authentification pour les informations d'identification (322) ; et
continuer l'exécution de la procédure de connexion de réseau une fois que les informations d'identification (322) ont été authentifiées avec succès dans la procédure d'authentification ; ou empêcher l'exécution de la procédure de connexion de réseau en cas d'échec de l'authentification des informations d'identification (322) dans la procédure d'authentification.

3. Procédé de connexion de réseau selon la revendication 2, **caractérisé en ce que**, les informations d'identification (322) étant un code d'identification, la procédure d'authentification est une procédure pour authentifier si les informations d'identification (322) correspondent à une adresse MAC du dispositif électronique (30), à un numéro de série de produit du dispositif électronique (30) ou à un numéro de série de puce du contrôleur intelligent de gestion de carte de base (33).

4. Procédé de connexion de réseau selon la revendication 1, **caractérisé en ce que**, une fois la connexion de réseau entre le contrôleur intelligent de gestion de carte de base (33) et le serveur de gestion (10) établie, le procédé de connexion de réseau comprend en outre les étapes consistant à :
transmettre un paquet incluant des options de détection via le contrôleur intelligent de gestion de carte de base (33) au serveur de gestion (10) ;
transmettre un ordre de collecte de valeurs de détection sur la base du paquet incluant des options de détection via le serveur de gestion (10) au contrôleur intelligent de gestion de carte de base (33) ; et
rapporter un paquet de réponse incluant des valeurs de détection sur la base de l'ordre de collecte de valeurs de détection via le contrôleur intelligent de gestion de carte de base (33) au serveur de gestion (10).

5. Procédé de connexion de réseau selon la revendication 4, **caractérisé en ce que**, avant que le contrôleur intelligent de gestion de carte de base (33) transmette le paquet incluant des options de détection au serveur de gestion (10), le procédé de connexion de réseau comprend en outre les étapes consistant à :
transmettre un ordre de requête d'options de détection via le serveur de gestion (10) au contrôleur intelligent de gestion de carte de base (33) ; et
transmettre le paquet incluant des options de détection sur la base de l'ordre de requête d'options de détection via le contrôleur intelligent de gestion de carte de base (33) au serveur de gestion (10).

6. Procédé de connexion de réseau selon la revendication 1, **caractérisé en ce que**, une fois la connexion de réseau entre le contrôleur intelligent de gestion de carte de base (33) et le serveur de gestion (10) établie, le procédé de connexion de réseau comprend en outre les étapes consistant à :
transmettre un paquet incluant des options de commande via le contrôleur intelligent de gestion de carte de base (33) au serveur de gestion (10) ;
transmettre un ordre de commande spécifique sur la base du paquet incluant des options de commande via le serveur de gestion (10) au contrôleur intelligent de gestion de carte de base (33) ;
exécuter une opération spécifique sur la base de l'ordre de commande spécifique via le contrôleur intelligent de gestion de carte de base (33) ; et
rapporter un résultat d'opération au serveur de gestion (10) via le contrôleur intelligent de gestion de carte de base (33) une fois l'opération spécifique terminée.

7. Procédé de connexion de réseau selon la revendication 6, **caractérisé en ce que**, avant que le contrôleur intelligent de gestion de carte de base (33) envoie le paquet incluant des options de commande au serveur de gestion (10), le procédé de connexion de réseau comprend en outre les étapes consistant à :
transmettre une commande de requête d'options de commande via le serveur de gestion (10) au contrôleur intelligent de gestion de carte de base (33) ; et
transmettre le paquet incluant des options de commande sur la base de l'ordre de requête d'options de commande via le contrôleur intelligent de gestion de carte de base (33) au serveur de gestion (10).
